# EUROPEAN PATENT SPECIFICATION

(11) **EP 2 821 303 B1**
(45) Date of publication and mention of the grant of the patent: **14.09.2016**
(21) Application number: 13175223.0
(22) Date of filing: 05.07.2013
(51) Int. Cl.: B60T 15/04, B60T 13/68

(54) **Electro-pneumatic parking brake**
Elektropneumatische Feststellbremse
Frein de stationnement électropneumatique

(43) Date of publication of application: 07.01.2015
(73) Proprietor: KNORR-BREMSE Systeme für Nutzfahrzeuge GmbH, 80809 München (DE)
(72) Inventor: Balogh, Levente, 2310 Szigetszentmiklos (HU)

(56) References cited:
- EP-A1- 1 464 557
- EP-A1- 2 133 250
- DE-A1-102007 014 423
- DE-A1-102008 031 327
- DE-B3-102008 007 877

## Description

### Field of the Invention

The invention relates to an electro-pneumatic parking brake arrangement, comprising a 3 by 2 pneumatically controlled valve having a fluid connection from an output port to a control port for defining the valve switching position by the output pressure and providing control pressure for a relay valve setting up a parking brake pressure in a springbrake chamber of a brake cylinder through an output port of the relay valve.

Electronic solutions to control a parking brake of the commercial vehicles are a new trend in the vehicle system development. Although working mechanisms are only available in the passenger car market, a few technical solutions of electro-pneumatic parking brakes are already described in technical literature as discussed below.

### Technological background

In the parking brake systems the main requirement is to ensure the so-called safe state, meaning park or release, even if failure occurs. This bi-stable property has to be combined with the proportional brake force control and the partly independent control of the trailer service brakes depending of the selected trailer strategy, which can be 'applied trailer service brakes at park' (trailer braked) or 'released trailer service brakes at park' (trailer unbraked). The possibility to reduce the parking brake force to avoid overload of the brake mechanism during service brake usage is an additional requirement which has to be performed without changing the park safe state.

The document DE102007014423A1 discloses an electro-pneumatic parking brake arrangement in that the bi-stability is solved by a bi-stable magnet valve. In case of electricity breakdown the actual pressure state is kept. Both trailer strategy as described above is supported.

The document DE102008007877A1 describes another electro-pneumatic parking brake arrangement in that the bi-stability is solved by a 3 by 2 valve which is pneumatically controlled by its output pressure supervised by a select-low valve. Safe state is ensured in all cases with the restriction that minimal pressure in drive state is limited above zero.

The document EP1464557B1 discloses an integrated air processing unit and electro-pneumatic parking brake in that the pressure control of the parking brake is solved by a valve block which is capable to inflate and deflate the springbrake chambers. The arrangement comprises a pressure sensor inserted between the valve arrangement and the parking brake connection.

The known solutions predominantly provide stable control by expensive and not durable solution. Some solutions are more effective, but requires a very complicate and accurate control to be able to provide stability, or rather works with extra constrains to be able to keep the system in the desired working mode.

### Brief description of the invention

It is an object of the present invention to provide an electro-pneumatic parking brake arrangement which is easy but accurate to control using robust technical means.

According to the invention a variable pressure level which is feeding an inlet port of the pneumatically controlled valve is provided by two 3 by 2 magnet valves, comprises:
- a fluid connection to the parking brake pressure supply input A provided through the parking brake check valve by inlet port of load magnet valve, and
- a fluid connection to the ambient pressure provided by exhaust port of the exhaust magnet valve, and
- a fluid connection from an outlet port of load magnet valve to an inlet port of the exhaust valve and the inlet port of the pneumatically controlled valve, and
- a fluid connection from an outlet port of the exhaust valve to an inlet port of the load valve.

Due to this special combination of the pneumatically controlled valve with two 3 by 2 magnet valves, a robust arrangement is achieved which provides an accurate pressure control for the parking brake of a commercial vehicle.

### Brief description of the drawings

Additional measures that improve the invention are included in the dependent claims and will be illustrated in greater detail below in conjunction with the description of preferred exemplary embodiments of the invention based on the figures. Shown on:
- Fig. 1: is a pneumatic diagram of an electro-pneumatic parking brake arrangement according to a first embodiment,
- Fig. 2: is a pneumatic diagram of an electro-pneumatic parking brake arrangement according to a second embodiment,
- Fig. 3: is a pneumatic diagram of an electro-pneumatic parking brake arrangement according to a third embodiment,
- Fig. 4: is a pneumatic diagram of an electro-pneumatic parking brake arrangement according to a forth embodiment,
- Fig. 5: is a pneumatic diagram of an electro-pneumatic parking brake arrangement according to a fifth embodiment, and
- Fig. 6: is a schematic of three different parking brake valve blocks containing an electro-pneumatic parking brake arrangement according to one of the preceding embodiments.

### Detailed description of the drawings

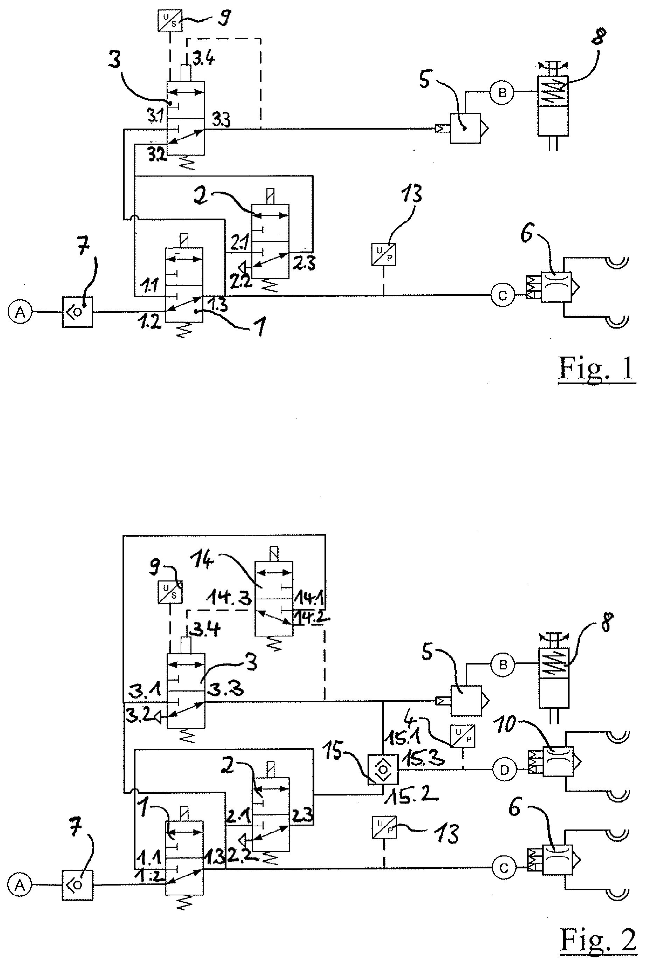

According to **Figure 1****,** in the initial park state of the parking brake a springbrake chambers 8 of a brake cylinder is continuously deflated via a relay valve 5. The control of the relay valve 5 is deflated through a pneumatically controlled valve 3, through a exhaust magnet valve 2 by inlet port 2.2 connected to the exhaust.

To change the safe state to release, the exhaust valve 2 is activated connecting the parking brake supply pressure input A through the parking brake check valve 7 and through the load magnet valve 1 to the inlet port 3.2 of the pneumatically controlled valve 3 providing high air pressure to switch itself to release position by its control port 3.4 and controlling the relay valve 5 with the pressure inflating the springbrake chamber 8.

The released position of the pneumatically controlled valve 3 is kept stable after the deactivation of the exhaust valve 2 by the connection of its control port 3.4 to the parking brake supply A through the pneumatically controlled valve 3, the load magnet valve 1 and the parking brake check valve 7. The pressure level can be reduced keeping the released position of the pneumatically controlled valve 3 until its designed switching pressure level by activating the exhaust valve 2 and the load valve 1 providing path for deflation from the relay valve 5 control through the pneumatically controlled valve 3 through the load magnet valve 1 and the exhaust magnet valve 2 to the ambient.

When the desired pressure level is reached, it can be kept constant by deactivating the exhaust magnet valve 2 to close the connection to the ambient while the activated load magnet valve 1 keep the connection to the parking brake supply pressure A interrupted. The pressure can be increased back by the deactivation of the load magnet valve 1. The position of the pneumatically controlled valve 3 can be changed back to the park position by decreasing the pressure below its designed switching level following the above mentioned method.

To be able to realise trailer unbraked control strategy, where a trailer control valve 6 is inflated both in stable park and release state, the trailer control module has connection to the outlet port 1.3 of the load magnet valve 1. The pressure which controls the trailer control module 6 is measured by pressure sensor 13 to provide information for the electronic control unit to manage the activations of the load and exhaust magnet valves 1 and 2 setting up intermediate pressure level both for the trailer control module 6 and the relay valve 5.

A variable pressure level which is feeding an inlet port 3.1 of the pneumatically controlled valve 3 is provided by both 3 by 2 magnet valves 1, 2 and a fluid connection to the parking brake pressure supply input A provided through the parking brake check valve 7 by inlet port 1.2 of load magnet valve 1, and a fluid connection to the ambient pressure provided by exhaust port 2.2 of the exhaust magnet valve 2, and a fluid connection from the outlet port 1.3 of load magnet valve 1 to an inlet port 2.1 of the exhaust valve 2 and the inlet port 3.1 of the pneumatically controlled valve 3, and a fluid connection from an outlet port 2.3 of the exhaust valve 2 to an inlet port 1.1 of the load valve 1.

To increase the monitoring precision, an additional position sensor 9 is included into the pneumatically controlled valve 3 to measure its actual position.

Having a 3/2 magnet valve 14 and select-high valve 15 instead of the previously mentioned two 2/2 magnet valves as shown in **Figure 2****,** the capability to reduce the pressure in the relay valve 5 control below the pneumatically controlled valve 3 switching level without its position change and the functionality related to the trailer control valve 10 controlled by braked trailer strategy can be realised.

The inlet port 3.2 of the pneumatically controlled valve 3 is connected to the ambient pressure. A 3 by 2 valve 14 is connected by its inlet port 14.1 to the outlet port 1.3 of the load magnet valve 1, and is connected by its inlet port 14.2 to the outlet port 3.3 of the pneumatically controlled valve 3, and is connected by its outlet port 14.3 to the control port 3.4 of the pneumatically controlled valve 3. A select-high valve 15 is connected of its inlet ports 15.1, 15.2 to the outlet port 3.3 of the pneumatically controlled valve 3, and the outlet port 2.3 of the exhaust valve 2 is connected by its outlet port 15.3 to a trailer control module 10) through output (D) for realising trailer braked strategy.

To provide information for the - not shown - electronic control unit for the switching management of the magnet valves, pressure sensors 4 and/or 13 are included. Having pressure sensor 4 in channel connected to trailer control module 10 controlled by trailer braked strategy, the control of the system can be realised. If this channel is not exist due to reduced functionality of the layout, at least the pressure sensor 13 is connected to the channel of the trailer control module 6 controlled by trailer unbraked strategy.

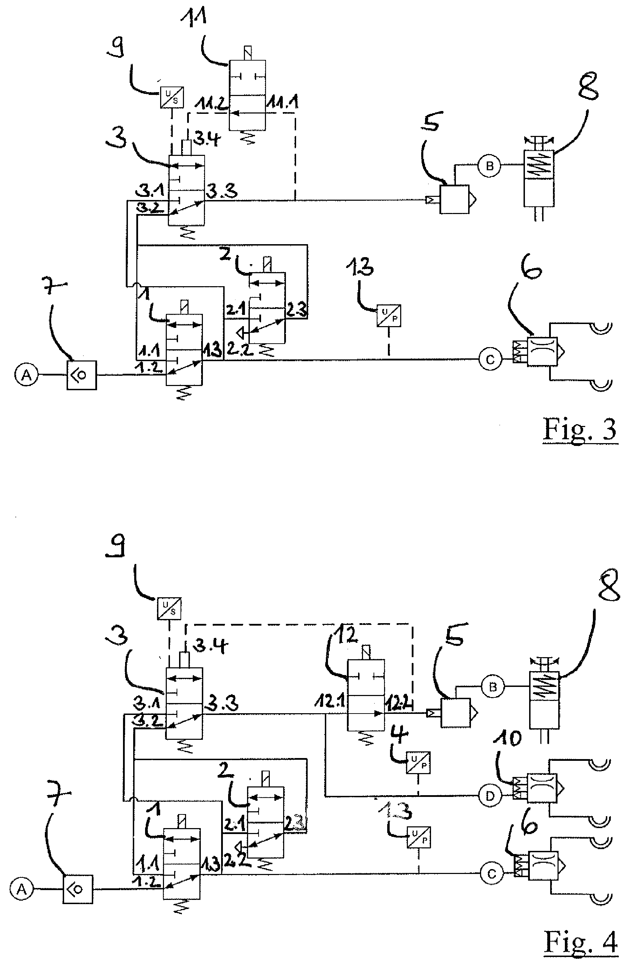

Having additional 2/2 magnet valve 11 as shown in **Figure 3****,** the control port 3.4 of the pneumatically controlled valve 3 can be separated from the relay valve 5 control which provides capability to decrease the pressure of the relay valve 5 control below the pneumatically controlled valve 3 designed switching level while a pressure level which is above of that can be kept on the control port 3.4 of the pneumatically controlled valve 3 keeping its released position. To change the position of the pneumatically controlled valve 3 to park position, the 2/2 magnet valve 11 has to be activated with the load and exhaust magnet valves 1 and 2 together.

In park position of the pneumatically controlled valve 3 the relay valve 5 control can be inflated by activation of the exhaust magnet valve 2 for reduce the compound effect on the brake calliper during service brake usage while the switching of the pneumatically controlled valve can be avoided by the activation of the 2/2 magnet valve 11.

Having additional 2/2 magnet valve 12 as shown in **Figure 4****,** the outlet port 3.3 of the pneumatically controlled valve 3 can be separated from the relay valve 5 control and a trailer control module 10 can be connected to the outlet port 3.3 of the pneumatically controlled valve 3 to realise trailer braked control strategy which inflates the trailer control module 10 in release state, deflates it in park state, but it is able to inflate it temporary without inflating the relay valve 5 in park state for testing the standing position of the vehicle combination having brake force provided by the truck only.

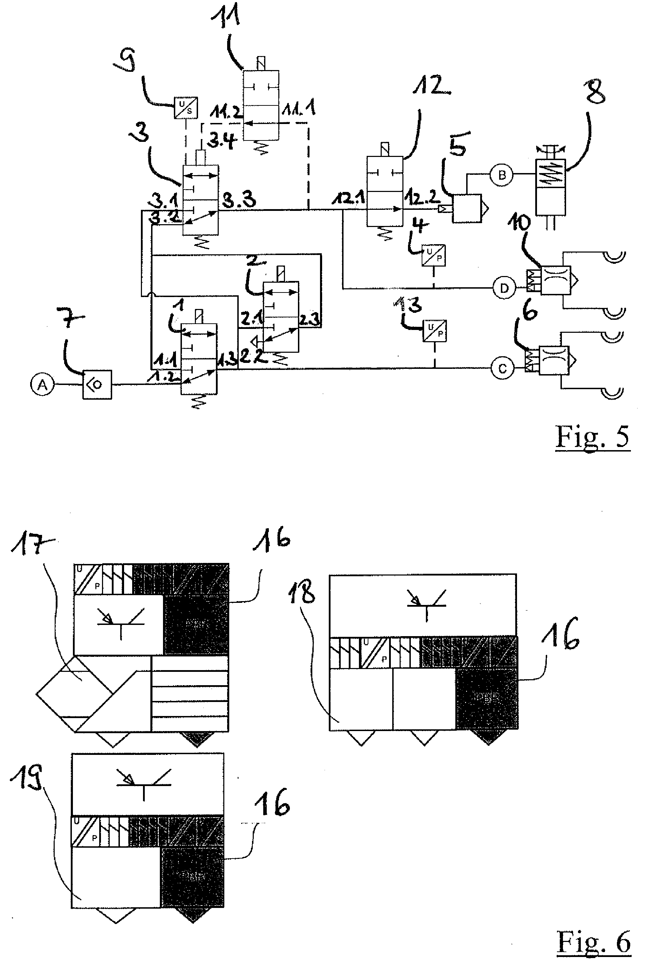

Combining the inclusion of both 2/2 magnet valve 11 and 12 as shown in **Figure 5****,** the functionalities related to the trailer control valve 10 controlled by trailer braked strategy and the functionality to decrease the pressure below the pneumatically controlled valve 3 designed switching level in the relay valve 5 control without changing the position of the pneumatically controlled valve 3 and the functionality to avoid the compound effect in park state can be combined in one layout.

According to **Figure 6** a parking brake valve block 16 containing the arrangement as described above is integrated into the electronic air processing system 17 of the vehicle.

Alternatively, the parking brake valve block 16 containing the arrangement is integrated into the electronic levelling system 18 of the vehicle.

Alternatively, the parking brake valve block 16 containing the arrangement is integrated into the electronic service brake system 19 of the vehicle.

In addition, let it be noted that "encompass" does not preclude any other elements or steps, and "an" or "a" do not rule out a plurality. Let it further be noted that the features or steps described with reference to one of the above exemplary embodiments can also be used in combination with other features or steps of other exemplary embodiments described above. References in the claims are not to be construed as a limitation.

## Claims

1. Electro-pneumatic parking brake arrangement, comprising a 3 by 2 pneumatically controlled valve (3) having a fluid connection from an output port (3.3) to a control port (3.4) for defining the valve switching position by the output pressure and providing control pressure for a relay valve (5) setting up a parking brake pressure in a springbrake chamber of a brake cylinder (8) through an output port (B) of the relay valve (5),
**characterised in that** a variable pressure level which is feeding an inlet port (3.1) of the pneumatically controlled valve (3) is provided by two 3 by 2 magnet valves (1, 2), further comprising:
- a fluid connection to the parking brake pressure supply input (A) provided through the parking brake check valve (7) by inlet port (1.2) of load magnet valve (1), and
- a fluid connection to the ambient pressure provided by exhaust port (2.2) of the exhaust magnet valve (2), and
- a fluid connection from an outlet port (1.3) of load magnet valve (1) to an inlet port (2.1) of the exhaust valve (2) and the inlet port (3.1) of the pneumatically controlled valve (3), and
- a fluid connection from an outlet port (2.3) of the exhaust valve (2) to an inlet port (1.1) of the load valve (1).

2. Electro-pneumatic parking brake arrangement according to claim 1,
**characterised in that** an inlet port (3.2) of the pneumatically controlled valve (3) is connected to the ambient pressure, and a 3 by 2 valve (14) is connected by its inlet port (14.1) to the outlet port (1.3) of the load magnet valve (1), and is connected by its inlet port (14.2) to the outlet port (3.3) of the pneumatically controlled valve (3), and is connected by its outlet port (14.3) to the control port (3.4) of the pneumatically controlled valve (3), wherein a select-high valve (15) is connected of its inlet ports (15.1, 15.2) to the outlet port (3.3) of the pneumatically controlled valve (3), and the outlet port (2.3) of the exhaust valve (2) is connected by its outlet port (15.3) to a trailer control module (10) through output (D) for realising trailer braked strategy.

3. Electro-pneumatic parking brake arrangement according to claim 1,
**characterised in that** the outlet port (2.3) of the exhaust magnet valve (2) is connected to the inlet port (3.2) of a pneumatically controlled valve (6).

4. Electro-pneumatic parking brake arrangement according to at least one of the preceeding claims,
**characterised in that** the outlet port (1.3) of the load magnet valve (1) is connected to a trailer control valve (6) through output (C) for realising trailer unbraked strategy.

5. Electro-pneumatic parking brake arrangement according to at least one of the preceeding claims,
**characterised in that** a 2 by 2 magnet valve (11) is connected by its inlet port (11.1) to the outlet port (3.3) of the pneumatically controlled valve (3) and its outlet port (11.2) is connected to the control port (3.4) of the pneumatically controlled valve (3).

6. Electro-pneumatic parking brake arrangement according to at least one of the claims 1, 3 and 4,
**characterised in that** a 2 by 2 magnet valve (12) is connected by its outlet port (12.2) to the control of the relay valve (5) and the control port (3.4) of the pneumatically controlled valve (3) and by its inlet port (12.1) to the outlet port (3.3) of the pneumatically controlled valve (3) having also connection to the trailer control module (10) through output (D) for realising trailer braked strategy.

7. Electro-pneumatic parking brake arrangement according to at least one of the claims 1, 3, 4 and 5,
**characterised in that** the 2 by 2 magnet valve (12) is connected by its inlet port (12.1) to the outlet port (3.3) of the pneumatically controlled valve (3) and to the output (D) to the trailer control valve (10) as a second trailer control option to perform trailer braked strategy, wherein the outlet port (12.2) of the 2 by 2 magnet valve (12) is connected to relay valve (5) and the control port (3.4) of the pneumatically controlled valve (3).

8. Electro-pneumatic parking brake arrangement according to at least one of the claims 2, 6 and 7,
**characterised in that** the trailer control output (D) is connected to a pressure sensor (4) measuring the pressure level by an electronic control unit.

9. Electro-pneumatic parking brake arrangement according to at least one of the preceding claims,
**characterised in that** the outlet port (1.3) of the load magnet valve (1) is connected to pressure sensor (13) measuring the pressure level by the electronic control unit.

10. Electro-pneumatic parking brake arrangement according to at least one of the preceding claims,
**characterised in that** the position of the pneumatically controlled valve (3) is measured by the electronic control unit via a position sensor (9).

## Patentansprüche

1. Elektropneumatische Feststellbremsanlage, welche ein pneumatisch gesteuertes 3/2-Ventil (3) aufweist, das eine Strömungsmittelverbindung von einem Auslassanschluss (3.3) zu einem Steueranschluss (3.4) zur Festlegung einer Ventilschaltstellung durch den Ausgangsdruck und zur Abgabe eines Steuerdrucks für ein Relaisventil (5) zum Aufbauen eines Feststell-Bremsdrucks in einer Federbremskammer eines Bremszylinders (8) über einen Ausgangsanschluss (B) des Relaisventils (5) besitzt,
**dadurch gekennzeichnet, dass** eine veränderliche Druckhöhe, die einem Einlassanschluss (3.1) des pneumatisch gesteuerten Ventils (3) zugeführt wird, von zwei 3/2-Magnetventilen (1, 2) geliefert wird, wobei des Weiteren folgendes vorgesehen ist:
- eine Strömungsmittelverbindung zum Zuführanschluss (A) für den Feststellbremsdruck, der von dem Zuführanschluss (1.2) des Lademagnetventils (1) durch das Feststellbremsen-Rückschlagventil (7) geliefert wird,
- eine Strömungsmittelverbindung zum Umgebungsdruck, den der Entlüftungsanschluss (2.2) des Entlüftungs-Magnetventils (2) liefert, und
- eine Strömungsmittelverbindung von einem Auslassanschluss (1.3) des Lademagnetventils (1) zu einem Einlassanschluss (2.1) des Entlüftungsventils (2) und den Einlassanschluss (3.1) des pneumatisch gesteuerten Ventils (3), und
- eine Strömungsmittelverbindung von einem Auslassanschluss (2.3) des Entlüftungsventils (2) zu einem Einlassanschluss (1.1) des Ladeventils (1).

2. Elektropneumatische Feststellbremsanlage nach Anspruch 1, **dadurch gekennzeichnet, dass** ein Einlassanschluss (3.2) des pneumatisch gesteuerten Ventils (3) mit dem Umgebungsdruck verbunden ist, und dass ein 3/2-Ventil (14) mittels seines Einlassanschlusses (14.1) mit dem Auslassanschluss (1.3) des Lademagnetventils (1) verbunden ist, und dass das 3/2-Ventil mittels seines Einlassanschlusses (14.2) mit dem Auslassanschluss (3.3) des pneumatisch gesteuerten Ventils (3) und mittels seines Auslassanschlusses (14.3) mit dem Steueranschluss (3.4) des pneumatisch gesteuerten Ventils (3) verbunden ist, wobei ein Ventil (15) zur Wahl eines hohen Werts mit seinen Einlassanschlüssen (15.1, 15.2) mit dem Auslassanschluss (3.3) des pneumatisch gesteuerten Ventils (3) und der Auslassanschluss (2.3) des Entlüftungsventils (2) mittels des Auslassanschlusses (15.3) durch den Ausgang (D) mit einem Anhängersteuermodul (10) zur Realisierung einer Strategie mit gebremstem Anhänger verbunden ist.

3. Elektropneumatische Feststellbremsanlage nach Anspruch 1, **dadurch gekennzeichnet, dass** der Auslassanschluss (2.3) des Entlüftungs-Magnetventils (2) mit dem Einlassanschluss (3.2) des pneumatisch gesteuerten Ventils (6) verbunden ist.

4. Elektropneumatische Feststellbremsanlage nach mindestens einem der vorhergehenden Ansprüche, **dadurch gekennzeichnet, dass** der Auslassanschluss (1.3) des Lademagnetventils (1) durch den Ausgang (C) mit einem Anhängersteuerventil (6) zur Realisierung einer Strategie mit ungebremstem Anhänger verbunden ist.

5. Elektropneumatische Feststellbremsanlage nach mindestens einem der vorhergehenden Ansprüche, **dadurch gekennzeichnet, dass** ein 2/2-Magnetventil (11) mittels eines Einlassanschlusses (11.1) mit dem Auslassanschluss (3.3) des pneumatisch gesteuerten Ventils (3) verbunden ist, während sein Auslassanschluss (11.2) mit dem Steueranschluss (3.4) des pneumatisch gesteuerten Ventils (3) verbunden ist.

6. Elektropneumatische Feststellbremsanlage nach mindestens einem der Ansprüche 1, 3 und 4, **dadurch gekennzeichnet, dass** ein 2/2-Magnetventil (12) mittels seines Auslassanschlusses (12.2) mit der Steuerung des Relaisventils (5) und dem Steueranschluss (3.4) des pneumatisch gesteuerten Ventils (3) verbunden ist sowie mittels seines Einlassanschlusses (12.1) mit dem Auslassanschluss (3.3) des pneumatisch gesteuerten Ventils (3) verbunden ist, das außerdem eine Verbindung durch den Ausgang (D) mit dem Anhängersteuermodul (10) zur Realisierung einer Strategie mit gebremstem Anhänger besitzt.

7. Elektropneumatische Feststellbremsanlage nach mindestens einem der Ansprüche 1, 3, 4 und 5, **dadurch gekennzeichnet, dass** als zweite Anhängersteueroption das 2/2-Magnetventil (12) mittels seines Einlassanschlusses (12.1) mit dem Auslassanschluss des pneumatisch gesteuerten Ventils (3) und dem Ausgang (D) am Anhängersteuerventil (10) zur Realisierung einer Strategie mit gebremstem Anhänger verbunden ist, wobei der Auslassanschluss (12.2) des 2/2-Magnetventils (12) mit dem Relaisventil (5) und dem Steueranschluss (3.4) des pneumatisch gesteuerten Ventils (3) verbunden ist.

8. Elektropneumatische Feststellbremsanlage nach mindestens einem der Ansprüche 2, 6 und 7, **dadurch gekennzeichnet, dass** der Anhängersteuerausgang (D) mit einem Druckfühler (4) verbunden ist, der den Druckwert mittels einer elektronischen Steuereinheit misst.

9. Elektropneumatische Feststellbremsanlage nach mindestens einem der vorhergehenden Ansprüche, **dadurch gekennzeichnet, dass** der Auslassanschluss (1.3) des Lademagnetventils (1) mit dem Druckfühler (13) verbunden ist, welcher den Druckwert mittels einer elektronischen Steuereinheit misst.

10. Elektropneumatische Feststellbremsanlage nach mindestens einem der vorhergehenden Ansprüche, **dadurch gekennzeichnet, dass** die Position des pneumatisch gesteuerten Ventils (3) über einen Positionsfühler (9) mittels der elektronischen Steuereinheit gemessen wird.

## Revendications

1. Dispositif électropneumatique de frein de stationnement, comprenant une vanne (3) 3 par 2 commandée pneumatiquement, ayant une connexion fluidique d'un orifice (3.3) de sortie à un orifice (3.4) de commande pour définir la position de commutation de la vanne par la pression de sortie et donnant une pression de commande d'un relais (5) de vanne, fixant une pression de frein de stationnement dans une chambre de frein à ressort d'un cylindre (8) de frein par l'intermédiaire d'un orifice (B) de sortie de la vanne (5) de relais,
**caractérisé en ce qu'**un niveau de pression variable, qui est appliqué à un orifice (3.1) d'entrée de la vanne (3) commandée pneumatiquement, est fourni par deux électrovannes (1.2) 3 par 2, comprenant en outre :
- une connexion fluidique à l'entrée (A) d'alimentation en pression de frein de stationnement donnée, par l'intermédiaire de la vanne (7) de contrôle de frein de stationnement, par l'orifice (1.2) d'entrée de l'électrovanne (1) de charge et
- une connexion fluidique à la pression ambiante donnée par un orifice (2.2) d'évacuation de l'électrovanne (2) d'évacuation et
- une connexion fluidique d'un orifice (1.3) de sortie de l'électrovanne (1) de charge à un orifice (2.1) d'entrée de la vanne (2) d'évacuation et à l'orifice (3.1) d'entrée de la vanne (3) commandée pneumatiquement et
- une connexion fluidique d'un orifice (2.3) de sortie de la vanne (2) d'évacuation à un orifice (1.1) d'entrée de la vanne (1) de charge.

2. Dispositif électropneumatique de frein de stationnement suivant la revendication 1,
**caractérisé en ce qu'**un orifice (3.2) d'entrée de la vanne (3) commandée pneumatiquement est relié à la pression ambiante et une vanne (14) 3 par 2 est reliée par son orifice (14.1) d'entrée à l'orifice (1.3) de sortie de l'électrovanne (1) de charge, et est reliée par son orifice (14.2) d'entrée à l'orifice (3.3) de sortie de la vanne commandée pneumatiquement, et est reliée par son orifice (14.3) de sortie à l'orifice (3.4) de commande de la vanne (3) commandée pneumatiquement, une vanne (15) de sélection haute est reliée de ses orifices (15.1, 15.2) d'entrée à l'orifice (3.3) de sortie de la vanne (3) commandée pneumatiquement et l'orifice (2.3) de sortie de la vanne (2) d'évacuation est reliée par son orifice (15.3) de sortie à un module (10) de commande de remorque par l'intermédiaire d'une sortie (D) pour réaliser une stratégie de freinage de remorque.

3. Dispositif électropneumatique de frein de stationnement suivant la revendication 1,
**caractérisé en ce que** l'orifice (2.3) de sortie de l'électrovanne (2) d'évacuation est relié à l'orifice (3.2) d'entrée d'une vanne (6) commandée pneumatiquement.

4. Dispositif électropneumatique de frein de stationnement suivant au moins l'une des revendications précédentes,
**caractérisé en ce que** l'orifice (1.3) de sortie de l'électrovanne (1) de charge est relié à une vanne (6) de commande de remorque par l'intermédiaire d'une sortie (C) pour réaliser une stratégie de non freinage d'une remorque.

5. Dispositif électropneumatique de frein de stationnement suivant au moins l'une des revendications précédentes,
**caractérisé en ce qu'**une électrovanne (11) 2 par 2 est reliée par son orifice (11.1) d'entrée à l'orifice (3.3) de sortie de la vanne (3.3) commandée pneumatiquement et son orifice (11.2) de sortie est relié à l'orifice (3.4) de commande de la vanne (3) commandée pneumatiquement.

6. Dispositif électropneumatique de frein de stationnement suivant au moins l'une des revendications 1, 3 et 4,
**caractérisé en ce qu'**une électrovanne (12) 2 par 2 est reliée par son orifice (12.2) de sortie à la commande de la vanne (5) de relais et à l'orifice (3.4) de commande de la vanne (3) commandée pneumatiquement et par son orifice (12.1) d'entrée à l'orifice (3.3) de sortie de la vanne commandée pneumatiquement en ayant aussi une connexion au module (10) de commande de remorque par l'intermédiaire de la sortie (D) pour réaliser une stratégie de freinage de remorque.

7. Procédé suivant au moins l'une des revendications 1, 3, 4 et 5,
**caractérisé en ce que** l'électrovanne (12) 2 par 2 est reliée par son orifice (12.1) d'entrée à l'orifice (3.3) de sortie de la vanne (3) commandée pneumatiquement et à la sortie (D) de la vanne (10) de commande de remorque en tant que deuxième option de commande de remorque pour effectuer une stratégie de freinage de remorque, l'orifice (12.2) de sortie de l'électrovanne (12) 2 par 2 étant relié à une vanne (5) de relais et à l'orifice (3.4) de commande de la vanne (3) commandée pneumatiquement.

8. Procédé suivant au moins l'une des revendications 2, 6 et 7,
**caractérisé en ce que** la sortie (D) de commande de remorque est reliée à une sonde (4) de pression mesurant le niveau de pression par une unité électronique de commande.

9. Procédé suivant au moins l'une des revendications précédentes,
**caractérisé en ce que** l'orifice (1.3) de sortie de l'électrovanne (1) de charge est relié à une sonde (13) de pression mesurant le niveau de pression par l'unité électronique de commande.

10. Procédé suivant au moins l'une des revendications précédentes,
**caractérisé en ce que** la position de la vanne (3) commandée pneumatiquement est mesurée par l'unité électronique de commande, par l'intermédiaire d'une sonde (9) de position.
